(19) Europäisches Patentamt
European Patent Office
Office européen des brevets

(11) **EP 4 450 579 A1**

(12) **EUROPEAN PATENT APPLICATION**
published in accordance with Art. 153(4) EPC

(43) Date of publication:
**23.10.2024 Bulletin 2024/43**

(21) Application number: **22893975.7**

(22) Date of filing: **30.11.2022**

(51) International Patent Classification (IPC):
**C09J 11/06** (2006.01)     **C09J 201/00** (2006.01)
**C09J 201/06** (2006.01)     **G09F 9/00** (2006.01)
**G09F 9/30** (2006.01)     **C09J 7/30** (2018.01)
**B32B 7/04** (2019.01)

(52) Cooperative Patent Classification (CPC):
**C09J 7/30; B32B 7/04; C09J 201/00; C09J 201/06;**
**G09F 9/00; G09F 9/30;** C09J 2203/318;
C09J 2301/312; C09J 2463/00

(86) International application number:
**PCT/JP2022/044271**

(87) International publication number:
**WO 2023/112685 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2021 JP 2021204360**

(71) Applicant: **Furukawa Electric Co., Ltd.
Tokyo 100-8322 (JP)**

(72) Inventors:
• **SAKAI, Koyuki
Tokyo 100-8322 (JP)**
• **TOKUHISA, Kenji
Tokyo 100-8322 (JP)**

(74) Representative: **Forstmeyer, Dietmar et al
Boeters & Lieck
Oberanger 32
80331 München (DE)**

(54) **SUBSTRATE-AND-ADHESIVE LAYER INTEGRATED SHEET FOR FLEXIBLE DEVICE, AND PRODUCTION METHOD OF FLEXIBLE DEVICE**

(57)     A base material/adhesive layer integrated sheet for a flexible device, containing a flexible film and an adhesive layer, in which the flexible film and the adhesive layer are laminated, an absolute value of a difference between surface free energy of the flexible film and surface free energy of a cured layer obtained by curing the adhesive layer is 30 dyn/cm or less, and the cured layer has a storage modulus of 5.0 GPa or less; and a method of producing a flexible device with the same.

[FIG. 1]

## Description

FIELD OF THE INVENTION

The present invention relates to a base material/adhesive layer integrated sheet for a flexible device and a method of producing a flexible device.

BACKGROUND OF THE INVENTION

A flexible device such as a flexible display is produced by forming semiconductor elements such as an organic electroluminescence (organic EL) element, a liquid crystal panel, a micro light emitting diode (micro LED), and a transistor (these are collectively referred to as a functional element) on a flexible support base material (flexible film). Recently, in application to a display of a mobile terminal such as a smartphone, a phablet, or a tablet, a foldable flexible device that can be folded or rolled is required.

As described above, such a flexible device includes a flexible film (back plate) as a support base material that supports the entire device in order to increase the strength of a device main body and impart reliability. That is, the functional element is fixed onto the flexible film, and the flexible device is produced. On both surfaces of the functional element, various functional layers (for example, a protective layer, a gas barrier layer (sealing layer), a polarizing plate, and a hard coat layer) are usually laminated, and the entire laminate including the functional element is integrally disposed on the flexible film and fixed via a paste-like or film-like adhesive. As the flexible film, a polyethylene terephthalate film, a polyimide film, or the like is used.

In production of a flexible device, an adhesive sheet used for adhesion between layers of a laminated structure has been proposed. For example, Patent Literature 1 describes an adhesive sheet for sealing a device, including a first release film, a second release film, and an adhesive layer sandwiched therebetween. This adhesive layer contains a compound having a cyclic ether group, and a storage modulus thereof at 23°C is adjusted to $9.5 \times 10^5$ Pa or more and $3.0 \times 10^7$ Pa or less. According to the technique described in Patent Literature 1, peelability of the release film from the adhesive layer is excellent even when the adhesive sheet is cut, and this adhesive layer is also excellent in adhesiveness to an adherend.

CITATION LIST

PATENT LITERATURE

Patent Literature 1: WO 2020/251030 A

SUMMARY OF THE INVENTION

TECHNICAL PROBLEM

As described in Patent Literature 1, an adhesive sheet used for adhesion between layers of a flexible device is used as an adhesive film having adhesiveness on both surfaces thereof by forming release films on both surfaces of an adhesive layer and peeling the release films on the both surfaces at the time of use. For example, in a case where a functional element is formed on a flexible film as the support base material, a two-step process is performed in which the release films are peeled off from the adhesive sheet, the flexible film is bonded to one surface of the adhesive layer, and the laminate including the functional element is bonded to the other surface. In this case, depending on a combination of the flexible film and the adhesive layer, when the adhesive layer is cured, peeling easily occurs between the flexible film and the adhesive layer at the time of bending. If peeling occurs between the flexible film and the adhesive layer, reliability of the device is largely reduced.

The present invention provides a base material/adhesive layer integrated sheet for a flexible device, formed by laminating a flexible film and an adhesive layer, having excellent adhesiveness (adhesiveness due to a curing reaction) between the flexible film and the adhesive layer, and capable of being directly bonded to a laminate including a functional element as a support base material for a flexible device. In addition, the present invention provides a method of producing a flexible device, capable of simplifying a flexible device producing process and further improving quality of a flexible device to be obtained.

SOLUTION TO PROBLEM

The above problems of the present invention have been solved by the following means.

[1] A base material/adhesive layer integrated sheet for a flexible device, containing:

a flexible film; and
an adhesive layer;

wherein the flexible film and the adhesive layer are laminated;
wherein an absolute value of a difference between surface free energy of the flexible film and surface free energy of a cured layer obtained by curing the adhesive layer is 30 dyn/cm or less, and
wherein the cured layer has a storage modulus of 5.0 GPa or less.

[2] The base material/adhesive layer integrated sheet for a flexible device described in [1], wherein an absolute value of a difference between a coefficient of linear expansion of the flexible film and a coefficient of linear expansion of the cured layer is 25 ppm/K or less.

[3] The base material/adhesive layer integrated sheet for a flexible device described in [1] or [2], wherein the adhesive layer contains at least a compound having a cyclic ether group, a curing agent of the compound, and a polymer component.

[4] The base material/adhesive layer integrated sheet for a flexible device described in any one of [1] to [3], wherein the adhesive layer or the cured layer has a thickness of 1 to 100 $\mu$m.

[5] The base material/adhesive layer integrated sheet for a flexible device described in any one of [1] to [4], wherein the flexible device is a flexible display.

[6] A method of producing a flexible device, including forming a support base material of the flexible device with the base material/adhesive layer integrated sheet for a flexible device described in any one of [1] to [5].

[7] The method of producing a flexible device described in [6], wherein the flexible device is a flexible display.

In the present invention, the numerical ranges expressed with the term "to" refer to ranges including, as the lower limit and the upper limit, the numerical values before and after the term "to".

In the present invention, for the terms "upper" and "lower" of the laminated structure, the flexible film side is used as "lower" and the adhesive layer side is used as "upper" for convenience.

ADVANTAGEOUS EFFECTS OF INVENTION

A base material/adhesive layer integrated sheet for a flexible device of the present invention has a laminated structure of a flexible film applicable as a support base material of a flexible device and an adhesive layer, and as a support base material of a flexible device, can be directly bonded to a laminate including a functional element via the adhesive layer, and is also excellent in adhesiveness (adhesiveness due to curing reaction) between the flexible film and the adhesive layer. That is, the base material/adhesive layer integrated sheet for a flexible device of the present invention contributes to simplification of a flexible device producing process and also contributes to improvement of quality of a flexible device to be obtained.

In addition, according to a method of producing a flexible device of the present invention, the flexible device producing process can be simplified, and the quality of a flexible device to be obtained can be further improved.

BRIEF DESCRIPTION OF DRAWINGS

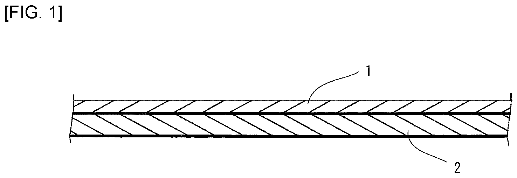

{FIG. 1}
FIG. 1 is a cross-sectional view schematically illustrating a laminated structure of a base material/adhesive layer integrated sheet for a flexible device of the present invention.

DESCRIPTION OF EMBODIMENTS

[Base material/adhesive layer integrated sheet for flexible device]

A base material/adhesive layer integrated sheet for a flexible device of the present invention (hereinafter, also simply referred to as "integrated sheet of the present invention") has a structure formed by laminating a flexible film and an adhesive layer. In the integrated sheet of the present invention, an absolute value of a difference between surface free energy of the flexible film and surface free energy of a cured layer obtained by curing the adhesive layer is 30 dyn/cm or less. This can effectively enhance adhesion of a contact surface between the flexible film and the cured layer of the adhesive layer. The cured layer has a storage modulus of 5 GPa or less.

With such a configuration, even when the integrated sheet is repeatedly bent after the adhesive layer of the integrated sheet is caused to undergo a curing reaction, it is possible to effectively suppress breakage of the cured layer, a fold mark of the cured layer, peeling between the cured layer and the flexible film, and the like. Therefore, by using the integrated sheet of the present invention as a support base material of a flexible device, reliability (structural stability and the like) of the flexible device can be further enhanced.

The flexible film and the adhesive layer constituting the integrated sheet of the present invention will be described in order.

<Flexible film>

The material, thickness, and the like of the flexible film constituting the integrated sheet of the present invention are not particularly limited as long as the flexible film has flexibility and can be used as a support base material of a flexible device. That is, a flexible film used for a flexible device can be widely applied.

The storage modulus of the flexible film is preferably 10 GPa or less, more preferably 7 GPa or less, and still more preferably 5 GPa or less. The storage modulus is usually 0.01 GPa or more, also preferably 0.05 GPa or more, and also preferably 0.1 GPa or more. The storage modulus of the flexible film is a storage modulus at 23°C when the flexible film is cut into a width of 5 mm, and the temperature thereof is raised from -20°C to 150°C under a tensile condition of a distance between chucks of 20 mm and a frequency of 10 Hz and a temperature raising rate of 5°C/min using a dynamic viscoelasticity measurement apparatus RSAIII (manufactured by TA Instruments).

In the present invention, the term "storage modulus" refers to a storage modulus at normal temperature (23°C).

Preferable examples of a material of the flexible film include a polyester resin, a polyimide resin, an acrylic resin (a polymethyl methacrylate (PMMA) resin and the like), a polycarbonate resin, an acrylonitrile/butadiene/styrene copolymer (ABS) resin, a polyolefin resin (a polypropylene resin, a polyethylene resin, and the like), a polyamide resin, a polyurethane resin, a polyvinyl alcohol (PVA) resin, a polystyrene resin, a polyphenylene sulfide (PPS) resin, and a polyether ether ketone (PEEK) resin. Among these materials, a polyester resin or a polyimide resin is preferable. Preferable examples of the polyester resin include a polyethylene terephthalate resin and a polyethylene naphthalate resin.

The thickness of the flexible film is usually 1 to 1,000 $\mu$m, preferably 5 to 800 $\mu$m, also preferably 5 to 400 $\mu$m, also preferably 5 to 200 $\mu$m, and also preferably 10 to 100 $\mu$m. The thickness can be measured by a contact type linear gauge method (desk-top contact type thickness measurement apparatus).

In a contact surface of the flexible film with the adhesive layer thereon, the surface free energy is preferably 10 to 200 dyn/cm, more preferably 20 to 100 dyn/cm, also preferably 30 to 80 dyn/cm, also preferably 35 to 75 dyn/cm, also preferably 40 to 70 dyn/cm, also preferably 45 to 65 dyn/cm, and also preferably 48 to 62 dyn/cm.

In the present invention, "surface free energy " is a value obtained by using the Owens and Wendt method, and is determined by measuring contact angles of a surface to be measured with respect to pure water and diiodomethane (droplet volume: 2 $\mu$L of pure water and 3 $\mu$L of diiodomethane, reading time: 30 seconds after dropping, measurement atmosphere: temperature 23°C and relative humidity 50%) and solving simultaneous expressions of the following Expression 1. Note that "solid surface" in the following refers to a surface to be measured (a surface of a flexible film and a surface of a cured layer obtained by curing an adhesive layer).

[Math. 1]

<Expression 1>

$$\gamma_s = \gamma_s^p + \gamma_s^d \qquad (1)$$
$$72.8(1 + \cos\theta_l^H) = 2(51.0\,\gamma_s^p)^{1/2} + 2(21.8\,\gamma_s^d)^{1/2} \qquad (2a)$$
$$50.8(1 + \cos\theta_l^I) = 2(2.3\,\gamma_s^p)^{1/2} + 2(48.5\,\gamma_s^d)^{1/2} \qquad (2b)$$

$\gamma_s$ = Surface free energy
$\gamma_s^p$ = Polar component of surface free energy
$\gamma_s^d$ = Dispersion component of surface free energy
$\theta_l^H$ = Contact angle of pure water with respect to solid surface
$\theta_l^I$ = Contact angle of diiodomethane ($CH_2I_2$) with respect to the solid surface

Here, Expression (1) is Fowkes-Owens Expression that divides components of surface free energy and indicates that the surface free energy $\gamma_s$ is a sum of a polar component $\gamma_s^p$ (only London force) of the surface free energy and a

dispersion component $\gamma_s^d$ (including Debye force and hydrogen bonding force) of the surface free energy. The above Expressions (2a) and (2b) are relational expressions obtained by combining Young's Expression with a relational expression of an extended Fowkes model for interfacial tension $\gamma$sl of an interface such as a solid s and a liquid I. Out of these expressions, Expression (2a) is a relational expression for pure water, and Expression (2b) is a relational expression for diiodomethane.

A surface tension $\lambda_l$, a surface tension polar component $\gamma_l^p$, and a surface tension dispersion component $\gamma_l^d$ of pure water are 72.8 mN/m, 51.0 mN/m, and 21.8 mN/m, respectively, and a surface tension $\gamma_l$, a surface tension polar component $\gamma_l^p$, and a surface tension dispersion component $\gamma_l^d$ of diiodomethane are 50.8 mN/m, 2.3 mN/m, and 48.5 mN/m, respectively. Therefore, these values are incorporated into the above Expressions (2a) and (2b). Note that "dyn/cm" has the same meaning as "mN/m".

Here, the surface free energy of the surface of the flexible film measured above can be regarded as surface free energy of the flexible film at a contact surface between the flexible film and the adhesive layer in the integrated sheet of the present invention. Similarly, the surface free energy of the surface of the cured layer obtained by curing the adhesive layer, measured above can be regarded as surface free energy of the cured layer at a contact surface between the flexible film and the cured layer of the adhesive layer in the integrated sheet of the present invention.

Note that the polar component and the dispersion component of pure water are different from the polar component and the dispersion component of diiodomethane, respectively, and therefore surface tensions thereof are different from each other as described above. This is because pure water and diiodomethane are different from each other in presence or absence of a hydrogen bond and a difference in electronegativity, and therefore the polarities thereof are largely different from each other. In particular, in a case of water, a hydrogen bond of -OH, -O-, or the like is strong, and the proportion of the polar component is large.

The coefficient of linear expansion of the flexible film is preferably 10 to 200 ppm/K, more preferably 20 to 150 ppm/K, still more preferably 30 to 100 ppm/K, also preferably 40 to 80 ppm/K, also preferably 50 to 80 ppm/K, also preferably 55 to 75 ppm/K, and also preferably 58 to 72 ppm/K from a viewpoint of thermal stability.

In the present invention, the coefficient of linear expansion is synonymous with a coefficient of linear thermal expansion. The coefficient of linear expansion is calculated from an elongation at 10 to 40°C when the temperature of a measurement sample obtained by cutting out the flexible film is raised from -20°C to 220°C at 5°C/min using a thermomechanical analyzer TMA/SS6100 (manufactured by Seiko Instruments Inc.). Note that, in the present invention, the term "coefficient of linear expansion" means a coefficient of linear expansion in every direction.

<Adhesive layer>

The adhesive layer constituting the integrated sheet of the present invention is cured by a curing reaction to exhibit adhesive strength to an adherend. That is, the adhesive layer is a layer made of a curable composition.

In the adhesive layer, the storage modulus of the cured layer after a curing reaction is 5.0 GPa or less. By setting the storage modulus to 5.0 GPa or less, it is possible to make peeling less likely to occur due to bending of the flexible device. The storage modulus of the cured layer is preferably 4.5 GPa or less, more preferably 4.0 GPa or less, still more preferably 3.5 GPa or less, further still more preferably 3.0 GPa or less, further still more preferably 2.5 GPa or less, and further still more preferably 2.2 GPa or less. In addition, the storage modulus of the cured layer is usually 0.5 GPa or more, also preferably 0.7 GPa or more, also preferably 0.8 GPa or more, and also preferably 0.9 GPa or more. The storage modulus of the cured layer is preferably 0.5 to 5.0 GPa, more preferably 0.7 to 5.0 GPa or less, still more preferably 0.8 to 4.5 GPa, further still more preferably 0.8 to 4.0 GPa, further still more preferably 0.8 to 3.5 GPa, further still more preferably 0.8 to 3.0 GPa, further still more preferably 0.8 to 2.5 GPa, and further still more preferably 0.9 to 2.2 GPa.

The storage modulus of the cured layer is determined as follows. The adhesive layer is peeled off from the integrated sheet, and only this adhesive layer is laminated at 70°C up to a thickness of 1 mm using a laminator, and cured under a condition (i) or (ii) described later. The obtained cured sample is cut into a width of 5 mm and used as a measurement sample. As described above, the temperature of the measurement sample is raised from -20°C to 150°C under a tensile condition of a distance between chucks of 20 mm and a frequency of 10 Hz and a temperature raising rate of 5°C/min using a dynamic viscoelasticity measurement apparatus RSAIII (manufactured by TA Instruments), and the storage modulus at 23°C is determined.

The storage modulus of the cured layer can be controlled by the chemical structure, type of functional group, functional group equivalent, content, and the like of a curable compound to be a constituent component of the adhesive layer (for example, the chemical structure and content of a compound having a cyclic ether group, the type of cyclic ether group, and a cyclic ether group equivalent), the chemical structure, molecular weight, glass transition temperature, content, and the like of a polymer component, and the type, content, and the like of a filler, a curing agent, or another additive in the adhesive layer.

In the present invention, "cured layer" means a cured layer obtained by causing the adhesive layer to undergo a curing reaction. When characteristics of the cured layer are specified or described in the present invention, this cured layer is a cured layer obtained by causing the adhesive layer to undergo a curing reaction under the following condition (i) or (ii) depending on the type of curing agent.

(i) When the curing agent is a photocationic polymerization initiator:
a cured layer obtained by irradiation with ultraviolet rays at 25°C under an irradiation condition of 1,000 mJ/cm$^2$ using a mercury lamp.
(ii) When the curing agent is a latent curing agent or a thermal cationic polymerization initiator:
a cured layer obtained by heat treatment at 150°C for one hour.

The thickness of each of the adhesive layer and the cured layer obtained by curing the adhesive layer is usually 1 to 100 $\mu$m, preferably 2 to 80 $\mu$m, also preferably 5 to 50 $\mu$m, also preferably 8 to 40 $\mu$m, and also preferably 10 to 30 $\mu$m.
In a contact surface of the cured layer obtained by curing the adhesive layer with the flexible film thereunder, the surface free energy is preferably 10 to 200 dyn/cm, more preferably 15 to 120 dyn/cm, also preferably 20 to 90 dyn/cm, also preferably 20 to 80 dyn/cm, also preferably 25 to 75 dyn/cm, and also preferably 28 to 70 dyn/cm.
The storage modulus of the cured layer can be controlled by the chemical structure, type of functional group, functional group equivalent, content, and the like of a curable compound to be a constituent component of the adhesive layer (for example, the chemical structure and content of a compound having a cyclic ether group, the type of cyclic ether group, and a cyclic ether group equivalent), the chemical structure, molecular weight, glass transition temperature, content, and the like of a polymer component, and the type, content, and the like of a filler, a curing agent, or another additive in the adhesive layer.
In the integrated sheet of the present invention, an absolute value of a difference between surface free energy of the flexible film and surface free energy of a cured layer obtained by curing the adhesive layer (hereinafter, also simply referred to as "difference in surface free energy between layers") is 30 dyn/cm or less. By setting the difference in surface free energy between layers to 30 dyn/cm or less, adhesiveness between the flexible film and the adhesive layer can be further enhanced. The difference in surface free energy between layers is more preferably 28 dyn/cm or less. In addition, the difference in surface free energy between layers is usually 1 dyn/cm or more, also preferably 2 dyn/cm or more, also preferably 4 dyn/cm or more, and also preferably 6 dyn/cm or more. The difference in surface free energy between layers is preferably 1 to 30 dyn/cm, also preferably 2 to 28 dyn/cm, also preferably 4 to 28 dyn/cm, also preferably 6 to 28 dyn/cm, and also preferably 7 to 27 dyn/cm.
The coefficient of linear expansion of the cured layer obtained by curing the adhesive layer is preferably 10 to 200 ppm/K, more preferably 20 to 150 ppm/K, still more preferably 25 to 100 ppm/K, also preferably 30 to 80 ppm/K, also preferably 40 to 80 ppm/K, also preferably 45 to 75 ppm/K, also preferably 46 to 70 ppm/K, and also preferably 47 to 65 ppm/K from a viewpoint of thermal stability.
The coefficient of linear expansion of the cured layer is determined as follows. The adhesive layer is peeled off from the integrated sheet, and only this adhesive layer is laminated at 70°C up to a thickness of 1 mm using a laminator, and subsequently cured under the above condition (i) or (ii). A prismatic test piece having a length of 5 mm $\times$ a width of 5 mm $\times$ a thickness of 1 mm is cut out from the obtained cured sample and used as a measurement sample. As described above, the coefficient of linear expansion is calculated from an elongation at 10 to 40°C when the temperature of the measurement sample is raised from -20°C to 220°C at 5°C/min using a thermomechanical analyzer TMA/SS6100 (manufactured by Seiko Instruments Inc.).
An absolute value of a difference between a coefficient of linear expansion of the flexible film and a coefficient of linear expansion of the cured layer obtained by curing the adhesive layer (hereinafter, also simply referred to as "difference in coefficient of linear expansion between layers") is preferably 30 ppm/K or less, more preferably 25 ppm/K or less, and still more preferably 20 ppm/K or less from a viewpoint of thermal stability. The difference in coefficient of linear expansion between layers is preferably as small as possible (the difference in coefficient of linear expansion between layers is particularly preferably 0 ppm/K), but is usually 1 ppm/K or more. The difference in coefficient of linear expansion between layers is preferably 1 to 30 ppm/K, preferably 1 to 25 ppm/K, also preferably 2 to 20 ppm/K, and also preferably 2 to 18 ppm/K.
A component composition of the adhesive layer is not particularly limited as long as it satisfies the requirements specified in the present invention. Preferable examples of a form of the adhesive layer include a form containing a compound having a cyclic ether group and a curing agent of the compound. In this case, the adhesive layer usually contains a polymer component (film component) separately from the compound having a cyclic ether group. In addition, the adhesive layer can contain other components as necessary for adjustment of surface free energy, elastic modulus, a coefficient of linear expansion, and the like. Constituent components of the adhesive layer will be described.

(Compound having cyclic ether group)

The compound having a cyclic ether group is a compound having at least one (preferably 2 to 20, more preferably 2 to 10) cyclic ether group in a molecule thereof. Note that, in the present invention, even when the compound having a cyclic ether group is a polymer, the compound having a cyclic ether group is not classified as the polymer component but classified as the compound having a cyclic ether group. Therefore, a general epoxy resin is classified as the compound having a cyclic ether group. Note that a phenoxy resin described later is not included in the compound having a cyclic ether group. That is, the phenoxy resin described later is a polymer component.

The compound having a cyclic ether group has a molecular weight of preferably 100 to 3,000, more preferably 200 to 1,500. The compound having a cyclic ether group has a cyclic ether equivalent of preferably 100 to 3,000 g/eq, also preferably 200 to 1,500 g/eq. "Cyclic ether equivalent" refers to the number of grams (g/eq) of a compound containing one gram equivalent of cyclic ether groups.

The number of ring-constituting atoms of the cyclic ether group is preferably 3 or 4. Examples of the cyclic ether group include an oxirane group (epoxy group), an oxetane group (oxetanyl group), a tetrahydrofuryl group, and a tetrahydropyranyl group. Among these groups, an oxirane group or an oxetane group is preferable, and an oxirane group is more preferable. That is, the compound having a cyclic ether group is particularly preferably an epoxy resin.

Examples of the skeleton of the epoxy resin include a phenol novolac type, an orthocresol novolac type, a cresol novolac type, a dicyclopentadiene type, a biphenyl type, a fluorene bisphenol type, a triazine type, a naphthol type, a naphthalene diol type, a triphenylmethane type, a tetraphenyl type, a bisphenol A type, a bisphenol F type, a bisphenol AD type, a bisphenol S type, and a trimethylolmethane type. Among these skeletons, a triphenylmethane type, a bisphenol A type, a cresol novolac type, and an orthocresol novolac type are preferable from a viewpoint of being capable of obtaining a film-like adhesive having low resin crystallinity and good appearance.

The content of the compound having a cyclic ether group in a solid content (components other than a solvent) of the adhesive layer is preferably 10 to 70% by mass, preferably 15 to 65% by mass, more preferably 20 to 60% by mass, and still more preferably 22 to 55% by mass.

(Curing agent)

As the curing agent of the compound having a cyclic ether group, a curing agent generally used as a curing agent of a compound having a cyclic ether group (an epoxy resin or the like), such as amines, acid anhydrides, polyhydric phenols, and a cationic polymerization initiator (preferably a photocationic polymerization initiator), can be widely used. When an organic EL device is assumed as the flexible device, since an adherend to be bonded to the integrated sheet of the present invention is weak against heat, it may be unsuitable to use a thermal cationic polymerization initiator as the curing agent. In addition, the thermal cationic polymerization initiator tends to excessively increase the elastic modulus of a cured layer to be obtained, and it is not suitable to use the thermal cationic polymerization initiator as the curing agent also from this viewpoint. Therefore, the curing agent is preferably a photocationic polymerization initiation or a latent curing agent.

Examples of the latent curing agent include a dicyandiamide compound, an imidazole compound, a curing catalyst-complex polyhydric phenol compound, a hydrazide compound, a boron trifluoride-amine complex, an aminimide compound, a polyamine salt, and modified products or microcapsules thereof. These may be used singly, or in combination of two or more types thereof. Use of an imidazole compound is more preferable from a viewpoint of providing even better latency (properties of excellent stability at room temperature and exhibiting curability by heating) and providing a more rapid curing rate.

The content of the curing agent in the adhesive layer only needs to be appropriately set according to the type and reaction form of the curing agent. For example, the content can be 0.5 to 30 parts by mass, may be 1 to 20 parts by mass or 1 to 15 parts by mass, and is also preferably 2 to 10 parts by mass or also preferably 3 to 8 parts by mass with respect to 100 parts by mass of the compound having a cyclic ether group.

(Polymer component)

The polymer component only needs to be a component that suppresses a film tack property at normal temperature (25°C) (property that the film state is likely to change by even a little temperature change) and imparts sufficient adhesiveness and film formability (film forming property). Examples thereof include a natural rubber, a butyl rubber, an isoprene rubber, a chloroprene rubber, an ethylene-vinyl acetate copolymer, an ethylene-(meth)acrylic acid copolymer, an ethylene-(meth)acrylic acid ester copolymer, a polybutadiene resin, a polycarbonate resin, a thermoplastic polyimide resin, polyamide resins such as 6-nylon and 6,6-nylon, a phenoxy resin, a (meth)acrylic resin, polyester resins such as polyethylene terephthalate and polybutylene terephthalate, a polyamideimide resin, a polyurethane resin, and a fluororesin. These polymer components may be used singly, or in combination of two or more types thereof.

The phenoxy resin has a structure similar to that of a compound having a cyclic ether group, and thus is preferable as a polymer component from a viewpoint of good compatibility. The phenoxy resin can be obtained by a usual method. For example, the phenoxy resin can be obtained by a reaction of a bisphenol or a biphenol compound with an epihalohydrin such as epichlorohydrin, or a reaction of a liquid epoxy resin with a bisphenol or a biphenol compound.

It is also preferable to use a (meth)acrylic resin as the polymer component. Examples of the (meth)acrylic resin include a copolymer containing a (meth)acrylic acid or (meth)acrylic acid ester component as a constituent component of the polymer.

Examples of a constituent component of the (meth)acrylic resin include components derived from 2-hydroxyethyl acrylate, 2-hydroxyethyl methacrylate, 2-hydroxypropyl acrylate, 2-hydroxypropyl methacrylate, acrylic acid, methacrylic acid, itaconic acid, glycidylmethacrylate, and glycidylacrylate. In addition, the (meth)acrylic resin may contain a (meth) acrylic acid ester (for example, a (meth)acrylic acid cycloalkyl ester, a (meth)acrylic acid benzyl ester, isobornyl (meth) acrylate, dicyclopentanyl (meth)acrylate, dicyclopentenyl (meth)acrylate, or dicyclopentenyloxyethyl (meth)acrylate) component having a cyclic skeleton as a constituent component. In addition, the (meth)acrylic resin can contain an imide (meth)acrylate component or a $C_{1-18}$ (meth)acrylic acid alkyl ester (for example, methyl (meth)acrylate, ethyl (meth) acrylate, propyl (meth)acrylate, or butyl (meth)acrylate) component. In addition, the (meth)acrylic resin may contain a copolymer with vinyl acetate, (meth)acrylonitrile, styrene, or the like. The (meth)acrylic resin preferably has a hydroxy group from a viewpoint of compatibility with a compound having a cyclic ether group.

The polymer component usually has a mass average molecular weight of 10,000 or more. The upper limit is not particularly limited, but is practically 5,000,000 or less.

The mass average molecular weight of the polymer component is a value determined by GPC (Gel Permeation Chromatography) in terms of polystyrene.

The polymer component has glass transition temperature (Tg) of preferably 100°C or lower, more preferably 90°C or lower. Tg of the polymer component is preferably -30°C or higher, also preferably -10°C or higher, also preferably 0°C or higher, also preferably 10°C or higher, and also preferably 20°C or higher, and may be 30°C or higher, 40°C or higher, 50°C or higher, or 60°C or higher. Tg of the polymer component is preferably -30 to 100°C, also preferably -10 to 100°C, also preferably 0 to 100°C, also preferably 10 to 90°C, also preferably 20 to 90°C, also preferably 30 to 90°C, also preferably 40 to 90°C, also preferably 50 to 90°C, and also preferably 60 to 90°C.

Tg of the polymer component is a peak top temperature of tan δ in dynamic viscoelasticity measurement. Specifically, Tg can be determined as follows.

A solution obtained by dissolving the polymer component therein is applied onto a release film, and heated and dried to form a film (polymer film) made of the polymer component on the release film. The release film is peeled off and removed from this polymer film. This polymer film is measured by using a dynamic viscoelasticity measurement apparatus (trade name: Rheogel-E4000F, manufactured by UBM) under a condition of a measurement temperature range of 20 to 300°C, a temperature raising rate of 5°C/min, and a frequency of 1 Hz. The obtained tan δ peak top temperature (temperature at which tan δ indicates maximum) is defined as Tg.

For example, the content of the polymer component in the adhesive layer can be 10 to 300 parts by mass, may be 20 to 200 parts by mass or 40 to 180 parts by mass, and is also preferably 60 to 160 parts by mass, also preferably 70 to 140 parts by mass, or also preferably 80 to 130 parts by mass with respect to 100 parts by mass of the compound having a cyclic ether group.

(Other components)

The adhesive layer may contain an inorganic filler. Examples of the inorganic filler include various inorganic powders made of ceramics such as silica, clay, gypsum, calcium carbonate, barium sulfate, alumina (aluminum oxide), beryllium oxide, magnesium oxide, silicon carbide, silicon nitride, aluminum nitride, and boron nitride; a metal or alloys, such as aluminum, copper, silver, gold, nickel, chromium, lead, tin, zinc, palladium, and solder; and carbons such as carbon nanotube and graphene.

The inorganic filler may be subjected to surface treatment or surface modification. Examples of such surface treatment or surface modification include a silane coupling agent, phosphoric acid, a phosphoric acid compound, and a surfactant.

Examples of the shape of the inorganic filler include a flake shape, a needle shape, a filament shape, a spherical shape, and a scale shape, but a spherical particle is preferable from a viewpoint of achieving higher filling and fluidity.

When the adhesive layer contains an inorganic filler, the content of the inorganic filler in the adhesive layer is preferably 70% by mass or less, more preferably 60% by mass or less, also preferably 50% by mass or less, and also preferably 40% by mass or less. When the adhesive layer contains an inorganic filler, the content of the inorganic filler in the adhesive layer can be 1% by mass or more, may be 2% by mass or more, and is also preferably 4% by mass or more. When the adhesive layer contains an inorganic filler, the content of the inorganic filler in the adhesive layer can be 1 to 70% by mass, 2 to 60% by mass, or 4 to 50% by mass, and is also preferably 4 to 40% by mass.

The adhesive layer may contain a silane coupling agent separately from the inorganic filler. The silane coupling agent is a compound in which at least one hydrolyzable group such as an alkoxy group or an aryloxy group is bonded to a silicon atom. In addition to these groups, an alkyl group, an alkenyl group, or an aryl group may be bonded to the silicon atom. The alkyl group is preferably an alkyl group substituted with an amino group, an alkoxy group, an epoxy group, or a (meth)acryloyloxy group, and more preferably an alkyl group substituted with an amino group (preferably, a phenylamino group), an alkoxy group (preferably, a glycidyloxy group), or a (meth)acryloyloxy group.

Examples of the silane coupling agent include 2-(3,4-epoxycyclohexyl) ethyltrimethoxysilane, 3-glycidyloxypropyltrimethoxysilane, 3-glycidyloxypropyltriethoxysilane, 3-glycidyloxypropylmethyldimethoxysilane, 3-glycidyloxy-propylmethyldiethoxysilane, dimethyldimethoxysilane, dimethyldiethoxysilane, methyltrimethoxysilane, methyltriethox-ysilane, phenyltrimethoxysilane, phenyltriethoxysilane, N-phenyl-3-aminopropyltrimethoxysilane, 3-methacryloyloxy-propylmethyldimethoxysilane, 3-methacryloyloxypropyltrimethoxysilane, 3-methacryloyloxypropylmethyldiethoxysi-lane, and 3-methacryloyloxypropyltriethoxysilane.

The adhesive layer may further contain an organic solvent, an ion trapping agent (ion capturing agent), a curing catalyst, a viscosity adjusting agent, an antioxidant, a flame retardant, a coloring agent, and the like. The adhesive layer can contain, for example, other additives described in WO 2017/158994 A.

The total proportion of the contents of the compound having a cyclic ether group, the curing agent thereof, and the polymer component in the adhesive layer can be, for example, 30% by mass or more, and is preferably 40% by mass or more and more preferably 50% by mass or more. The proportion may be 60% by mass or more, 70% by mass or more, 80% by mass or more, or 90% by mass or more.

[Production of base material/adhesive layer integrated sheet for flexible device]

The integrated sheet of the present invention can be formed by preparing a composition (varnish) obtained by mixing the constituent components of the adhesive layer, applying the composition onto a flexible film, and drying the composition as necessary. The composition (varnish) obtained by mixing the constituent components of the adhesive layer usually contains an organic solvent.

A publicly known method can be appropriately employed as an application method, and examples thereof include methods using a roll knife coater, a gravure coater, a die coater, a reverse coater, and the like.

Drying only needs to be able to form the adhesive layer by removing the organic solvent without substantially causing a curing reaction, and can be performed, for example, by holding the composition at a temperature of 80 to 150°C for 1 to 20 minutes.

The integrated sheet of the present invention may have a configuration including a flexible film and an adhesive layer, or may be in a form in which the above-described release-treated base material film is bonded to a surface of the adhesive layer on a side opposite to the flexible film side. In addition, a protective film or the like may be formed on a surface of the flexible film on a side opposite to the adhesive layer side. In addition, the integrated sheet of the present invention may be in a form obtained by cutting the sheet into an appropriate size or a form obtained by winding the sheet into a roll form.

The integrated sheet of the present invention is preferably stored under a temperature condition of 10°C or lower before use (before curing reaction) from a viewpoint of suppressing a curing reaction of the adhesive layer (curing reaction of the compound having a cyclic ether group).

[Method of producing a flexible device]

In the integrated sheet of the present invention, the flexible film constituting the integrated sheet can be used as a support base material (back plate) that supports the entire flexible device, and the adhesive layer of the integrated sheet can function as a layer for bonding the support base material to a laminate including a functional element thereon (a laminate of a functional element and various functional layers disposed on one surface or both surfaces of the functional element). Therefore, the method of producing a flexible device of the present invention includes a step of forming a support base material of a flexible device with the integrated sheet of the present invention, that is, a step of bonding the adhesive layer side of the integrated sheet of the present invention to a laminate including a functional element and causing the adhesive layer to undergo a curing reaction.

Conditions for this curing reaction can be appropriately set in consideration of the type of curing agent, heat resistance of the functional element, and the like. For example, when a photocationic polymerization initiator is used as the curing agent, the adhesive layer can be sufficiently cured by irradiating the adhesive layer with ultraviolet rays of 100 to 3,000 mJ/cm$^2$ using a mercury lamp or the like. In addition, when a latent curing agent or a thermal cationic polymerization initiator is used, for example, the adhesive layer can be sufficiently cured by heating the adhesive layer at a temperature of 150°C or higher for one hour or more.

EXAMPLES

The present invention will be described in more detail based on Examples and Comparative Examples. However, the present invention is not limited to forms of the following Examples. In addition, the room temperature means 25°C, MEK means methyl ethyl ketone, PET means polyethylene terephthalate, and UV means ultraviolet rays. "%" and "part" are on a mass basis unless otherwise specified.

[Example 1]

In a 1,000 mL separable flask, 50 parts by mass of 828 (bisphenol A type liquid epoxy resin, manufactured by Mitsubishi Chemical Corporation) as a compound having a cyclic ether group, 50 parts by mass of YP-50 (phenoxy resin, Tg 84°C, manufactured by NIPPON STEEL CHEMICAL & MATERIALS CO., LTD.) as a polymer component, and 30 parts by mass of MEK were heated and stirred at a temperature of 110°C for two hours to obtain a resin varnish. Furthermore, this resin varnish was transferred to a 800 mL planetary mixer, 2 parts by mass of WPI-113 (UV cationic polymerization initiator, manufactured by FUJIFILM Wako Pure Chemical Corporation) was added thereto as a curing agent, and the mixture was stirred and mixed at room temperature for one hour and then vacuum-defoamed to obtain a mixed varnish. Subsequently, the obtained mixed varnish was applied onto a PET film (flexible film, storage modulus at 23°C: 5 GPa) having a thickness of 20 μm, and heated and dried at 130°C for 10 minutes to obtain an integrated sheet having a length of 300 mm, a width of 200 mm, and a thickness of an adhesive layer of 20 μm.

[Example 2]

An integrated sheet was obtained in a similar manner to Example 1 except that the curing agent was replaced with 2 parts by mass of 2E4MZ (imidazole-based thermosetting agent, manufactured by Shikoku Chemicals Corporation) in Example 1.

[Example 3]

An integrated sheet was obtained in a similar manner to Example 1 except that 1 part by mass of KBM-402 (silane coupling agent, manufactured by Shin-Etsu Chemical Co., Ltd.) was added to the mixed varnish in Example 1.

[Example 4]

An integrated sheet was obtained in a similar manner to Example 2 except that 1 part by mass of KBM-402 (silane coupling agent, manufactured by Shin-Etsu Chemical Co., Ltd.) was added to the mixed varnish in Example 2.

[Example 5]

An integrated sheet was obtained in a similar manner to Example 1 except that 10 parts by mass of SIRMEK50WT%-M01 (silica slurry filler, manufactured by CIK Nanotech Co., Ltd.) was added to the mixed varnish in Example 1.

[Example 6]

An integrated sheet was obtained in a similar manner to Example 2 except that 80 parts by mass of SIRMEK50WT%-M01 (silica slurry filler, manufactured by CIK Nanotech Co., Ltd.) and 1 part by mass of KBM-402 (silane coupling agent, manufactured by Shin-Etsu Chemical Co., Ltd.) were added to the mixed varnish in Example 2.

[Example 7]

An integrated sheet was obtained in a similar manner to Example 1 except that the compound having a cyclic ether group was replaced with 50 parts by mass of EPPN-501H (triphenylmethane type epoxy resin, manufactured by Nippon Kayaku Co., Ltd.) in Example 1.

[Example 8]

An integrated sheet was obtained in a similar manner to Example 2 except that the compound having a cyclic ether group was replaced with a mixture of 25 parts by mass of 828 (bisphenol A type liquid epoxy resin, manufactured by Mitsubishi Chemical Corporation) and 25 parts by mass of EPPN-501H (triphenylmethane type epoxy resin, manufactured by Nippon Kayaku Co., Ltd.) in Example 2.

[Comparative Example 1]

An integrated sheet was obtained in a similar manner to Example 1 except that 300 parts by mass of SIRMEK50WT%-M01 (silica slurry filler, manufactured by CIK Nanotech Co., Ltd.) was added to the mixed varnish in Example 1.

[Comparative Example 2]

An integrated sheet was obtained in a similar manner to Example 4 except that 450 parts by mass of SIRMEK50WT%-M01 (silica slurry filler, manufactured by CIK Nanotech Co., Ltd.) was added to the mixed varnish in Example 4.

[Comparative Example 3]

An integrated sheet was obtained in a similar manner to Example 1 except that 1 part by mass of KY-1271 (fluorine compound, manufactured by Shin-Etsu Chemical Co., Ltd.) was added to the mixed varnish in Example 1.

[Comparative Example 4]

An integrated sheet was obtained in a similar manner to Example 7 except that the polymer component was replaced with 50 parts by mass of YX7200B35 (phenoxy resin, Tg 150°C, manufactured by Mitsubishi Chemical Corporation) in Example 7.

[Comparative Example 5]

An integrated sheet was obtained in a similar manner to Example 7 except that the curing agent was replaced with 2 parts by mass of SI-B3 (thermal cationic polymerization initiator, manufactured by Sanshin Chemical Industry Co., Ltd.) in Example 7.

[Comparative Example 6]

An integrated sheet was obtained in a similar manner to Example 1 except that the polymer component was replaced with 50 parts by mass of YX7200B35 (phenoxy resin, Tg 150°C, manufactured by Mitsubishi Chemical Corporation) and the curing agent was replaced with 2 parts by mass of SI-B3 (thermal cationic polymerization initiator, manufactured by Sanshin Chemical Industry Co., Ltd.) in Example 1.

Using the integrated sheet obtained in each of Examples and each Comparative Examples, a flex resistance test using a mandrel was performed as follows. The results are shown in the following Table. Note that, as a curing condition in physical property values and the mandrel test, (i) or (ii) described above was employed depending on the type of curing agent. The employed curing conditions are also shown in Table below.

<Flex resistance test>

The integrated sheet was cut into a width of 25 mm and a length of 10 cm, and the adhesive layer was caused to undergo a curing reaction under the curing condition (i) or (ii) described above to obtain a test piece. The adhesive layer was set on a side opposite to the mandrel based on an intermediate point in the longitudinal direction, and an operation of bending the test piece by 180° was repeated 1,000 times. The diameter (mm) of the mandrel in which breakage of the adhesive layer, a fold mark of the adhesive layer, or peeling between the adhesive layer and the flexible film occurred was applied to the following evaluation criteria, and flex resistance was evaluated. The results are shown in Table 1.

(Evaluation criteria)

A: 4 mm or less
B: 5 mm or more and 15 mm or less
C: 16 mm or more

EP 4 450 579 A1

[Table 1]

| | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Adhesive | Compound having cyclic ether group | 828 (Bisphenol A type liquid epoxy resin) | 50 | 50 | 50 | 50 | 50 | 50 | | 25 |
| | | EPPN-501H (Triphenylmethane type epoxy resin) | | | | | | | 50 | 25 |
| | Polymer component | YP-50 (Phenoxy resin, Tg 84°C) | 50 | 50 | 50 | 50 | 50 | 50 | 50 | 50 |
| | | YX7200B35 (Phenoxy resin, Tg 150°C) | | | | | | | | |
| | Inorganic filler | SIRMEK50WT%-M01 (Silica slurry) | | | | | 10 | 80 | | |
| | Additive | KBM-402 (Silane coupling agent) | | | 1 | 1 | | 1 | | |
| | | KY-1271 (Fluorine compound) | | | | | | | | |
| | Curing agent | WPI-113 (UV cationic polymerization initiator) | 2 | | 2 | | 2 | | 2 | |
| | | SI-B3 (Thermal cationic polymerization initiator) | | | | | | | | |
| | | 2E4MZ (Imidazole-based thermosetting agent) | | 2 | | 2 | | 2 | | 2 |
| Curing conditions of adhesive layer | | | (i) | (ii) | (i) | (ii) | (i) | (ii) | (i) | (ii) |
| Surface free energy [dyn/cm] of cured layer obtained by curing adhesive layer | | | 29 | 64 | 36 | 67 | 30 | 65 | 35 | 65 |
| Surface free energy of flexible film [dyn/cm] | | | 56 | | | | | | | |
| Difference in surface free energy between layers [dyn/cm] | | | 27 | 8 | 20 | 11 | 26 | 9 | 21 | 9 |
| Normal temperature (23°C) storage modulus [GPa] of cured layer obtained by curing adhesive layer | | | 1.2 | 1.5 | 1.0 | 1.1 | 2.0 | 4.8 | 4.9 | 5.0 |
| Coefficient of linear expansion [ppm/K] of cured layer obtained by curing adhesive layer | | | 60 | 50 | 62 | 55 | 48 | 41 | 52 | 39 |
| Coefficient of linear expansion of flexible film [ppm/K] | | | 65 | | | | | | | |
| Difference in coefficient of linear expansion between layers [ppm/K] | | | 5 | 15 | 3 | 10 | 17 | 24 | 13 | 26 |
| Flex resistance evaluation | | | A | A | A | A | A | B | B | B |

Remarks: 'Ex.' means Example according to this invention.

[Table 1] (continued)

| | | | CEx. 1 | CEx. 2 | CEx. 3 | CEx. 4 | CEx. 5 | CEx. 6 |
|---|---|---|---|---|---|---|---|---|
| Adhesive | Compound having cyclic ether group | 828 (Bisphenol A type liquid epoxy resin) | 50 | 50 | 50 | | | 50 |
| | | EPPN-501H (Triphenylmethane type epoxy resin) | | | | 50 | 50 | |
| | Polymer component | YP-50 (Phenoxy resin, Tg 84°C) | 50 | 50 | 50 | | 50 | |
| | | YX7200B35 (Phenoxy resin, Tg 150°C) | | | | 50 | | 50 |
| | Inorganic filler | SIRMEK50WT%-M01 (Silica slurry) | 300 | 450 | | | | |
| | Additive | KBM-402 (Silane coupling agent) | | 1 | | | | |
| | | KY-1271 (Fluorine compound) | | | 1 | | | |
| | Curing agent | WPI-113 (UV cationic polymerization initiator) | 2 | | 2 | 2 | | |
| | | SI-B3 (Thermal cationic polymerization initiator) | | | | | 2 | 2 |
| | | 2E4MZ (Imidazole-based thermosetting agent) | | 2 | | | | |
| Curing conditions of adhesive layer | | | (i) | (ii) | (i) | (i) | (ii) | (ii) |
| Surface free energy [dyn/cm] of cured layer obtained by curing adhesive layer | | | 73 | 65 | 2 | 40 | 38 | 35 |
| Surface free energy of flexible film [dyn/cm] | | | 56 | | | | | |
| Difference in surface free energy between layers [dyn/cm] | | | 17 | 9 | 54 | 16 | 18 | 25 |
| Normal temperature (23°C) storage modulus [GPa] of cured layer obtained by curing adhesive layer | | | 14 | 19 | 1.0 | 7.0 | 5.5 | 5.2 |
| Coefficient of linear expansion [ppm/K] of cured layer obtained by curing adhesive layer | | | 27 | 20 | 63 | 49 | 45 | 50 |
| Coefficient of linear expansion of flexible film [ppm/K] | | | 65 | | | | | |
| Difference in coefficient of linear expansion between layers [ppm/K] | | | 38 | 45 | 2 | 16 | 20 | 15 |
| Flex resistance evaluation | | | C | C | C | C | C | C |
| Remarks: "CEx.' means Comparative Example. | | | | | | | | |

In Table above, the blending amount of each component of the adhesive is indicated by parts by mass.

As shown in Table above, when the storage modulus of the cured layer obtained by curing the adhesive layer was higher than that specified in the present invention, breakage of the adhesive layer, a folding mark of the adhesive layer, or peeling between the adhesive layer and the flexible film easily occurred against repeated bending, and the flex resistance was poor (Comparative Examples 1, 2, and 4 to 6). In addition, when the difference in surface free energy between layers was larger than that specified in the present invention, the flex resistance was poor (Comparative Example 3).

Meanwhile, all of the integrated sheets of Examples 1 to 8 satisfying the requirements of the present invention exhibited excellent flex resistance. It can be found that application of the integrated sheet of the present invention as a support base material of a flexible device contributes to reduction of man-hours and improvement of reliability of the flexible device.

The present application claims priority of Japanese Patent Application No. 2021-204360 filed in Japan on December 16, 2021, which is herein incorporated by reference as part of the present specification.

DESCRIPTION OF SYMBOLS

1 Adhesive layer (film-like adhesive)
2 Flexible film (support base material)

**Claims**

1. A base material/adhesive layer integrated sheet for a flexible device, comprising:

   a flexible film; and
   an adhesive layer;
   wherein the flexible film and the adhesive layer are laminated,
   wherein an absolute value of a difference between surface free energy of the flexible film and surface free energy of a cured layer obtained by curing the adhesive layer is 30 dyn/cm or less, and
   wherein the cured layer has a storage modulus of 5.0 GPa or less.

2. The base material/adhesive layer integrated sheet for a flexible device according to claim 1, wherein an absolute value of a difference between a coefficient of linear expansion of the flexible film and a coefficient of linear expansion of the cured layer is 25 ppm/K or less.

3. The base material/adhesive layer integrated sheet for a flexible device according to claim 1 or 2, wherein the adhesive layer comprises at least a compound having a cyclic ether group, a curing agent of the compound, and a polymer component.

4. The base material/adhesive layer integrated sheet for a flexible device according to any one of claims 1 to 3, wherein the adhesive layer or the cured layer has a thickness of 1 to 100 $\mu$m.

5. The base material/adhesive layer integrated sheet for a flexible device according to any one of claims 1 to 4, wherein the flexible device is a flexible display.

6. A method of producing a flexible device, comprising forming a support base material of the flexible device with the base material/adhesive layer integrated sheet for a flexible device according to any one of claims 1 to 5.

7. The method of producing a flexible device according to claim 6, wherein the flexible device is a flexible display.

[FIG. 1]

<table>
<tr><td colspan="2"><b>INTERNATIONAL SEARCH REPORT</b></td><td colspan="2">International application No.<br><br><b>PCT/JP2022/044271</b></td></tr>
</table>

**A. CLASSIFICATION OF SUBJECT MATTER**

*C09J 11/06*(2006.01)i; *C09J 201/00*(2006.01)i; *C09J 201/06*(2006.01)i; *G09F 9/00*(2006.01)i; *G09F 9/30*(2006.01)i; *C09J 7/30*(2018.01)i; *B32B 7/04*(2019.01)i
FI: G09F9/00 342; B32B7/04; C09J7/30; C09J11/06; C09J201/00; C09J201/06; G09F9/30 308Z

According to International Patent Classification (IPC) or to both national classification and IPC

**B. FIELDS SEARCHED**

Minimum documentation searched (classification system followed by classification symbols)

C09J11/06; C09J201/00; C09J201/06; G09F9/00; G09F9/30; C09J7/30; B32B7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-126130 A (NITTO DENKO CORP) 11 July 2016 (2016-07-11)<br>paragraphs [0006], [0017]-[0121], [0124]-[0151], [0169]-[0173], fig. 2, 5-7 | 1-7 |
| Y | JP 2014-97595 A (TORAY IND INC) 29 May 2014 (2014-05-29)<br>paragraph [0035] | 1-7 |
| Y | WO 2011/125099 A1 (KABUSHIKI KAISHA TOSHIBA) 13 October 2011 (2011-10-13)<br>paragraph [0026] | 1-7 |
| Y | JP 2020-105061 A (NIPPON ELECTRIC GLASS CO) 09 July 2020 (2020-07-09)<br>paragraph [0038] | 2 |
| Y | JP 2003-216060 A (SUMITOMO BAKELITE CO LTD) 30 July 2003 (2003-07-30)<br>paragraph [0032] | 2 |
| A | JP 2018-28974 A (NITTO DENKO CORP) 22 February 2018 (2018-02-22)<br>entire text, all drawings | 1-7 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**22 December 2022** | Date of mailing of the international search report<br><br>**10 January 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

| International application No. |
|---|
| **PCT/JP2022/044271** |

### C. DOCUMENTS CONSIDERED TO BE RELEVANT

| Category* | Citation of document, with indication, where appropriate, of the relevant passages | Relevant to claim No. |
|---|---|---|
| A | CN 112625623 A (SHENZHEN SELEN SCIENCE & TECHNOLOGY CO., LTD.) 09 April 2021 (2021-04-09)<br>    entire text, all drawings | 1-7 |

Form PCT/ISA/210 (second sheet) (January 2015)

INTERNATIONAL SEARCH REPORT
Information on patent family members

| | | International application No. |
|---|---|---|
| | | **PCT/JP2022/044271** |

| Patent document cited in search report | | | Publication date (day/month/year) | Patent family member(s) | | | Publication date (day/month/year) |
|---|---|---|---|---|---|---|---|
| JP | 2016-126130 | A | 11 July 2016 | (Family: none) | | | |
| JP | 2014-97595 | A | 29 May 2014 | (Family: none) | | | |
| WO | 2011/125099 | A1 | 13 October 2011 | US paragraph [0061] | 2013/0004724 | A1 | |
| JP | 2020-105061 | A | 09 July 2020 | (Family: none) | | | |
| JP | 2003-216060 | A | 30 July 2003 | (Family: none) | | | |
| JP | 2018-28974 | A | 22 February 2018 | WO | 2018/034151 | A1 | |
| | | | | TW | 201825626 | A | |
| CN | 112625623 | A | 09 April 2021 | (Family: none) | | | |

Form PCT/ISA/210 (patent family annex) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020251030 A
- WO 2017158994 A
- JP 2021204360 A